(19) Europäisches Patentamt / European Patent Office / Office européen des brevets

(11) **EP 2 016 537 B1**

(12) **FASCICULE DE BREVET EUROPEEN**

| | |
|---|---|
| (45) Date de publication et mention de la délivrance du brevet: **23.09.2009 Bulletin 2009/39** | (51) Int Cl.: **G06K 19/07** *(2006.01)* |
| (21) Numéro de dépôt: **07734456.2** | (86) Numéro de dépôt international: **PCT/IB2007/001139** |
| (22) Date de dépôt: **02.05.2007** | (87) Numéro de publication internationale: **WO 2007/129187 (15.11.2007 Gazette 2007/46)** |

(54) **PROCEDE ET DISPOSITIF DE TRANSMISSION DE DONNEES PAR MODULATION DE CHARGE**

VERFAHREN UND EINRICHTUNG ZUM ÜBERTRAGEN VON DATEN DURCH LADUNGSMODULATION

METHOD AND DEVICE FOR TRANSMITTING DATA BY CHARGE MODULATION

| | |
|---|---|
| (84) Etats contractants désignés: **AT DE FR GB** | (72) Inventeur: **MARTIN, Michel 13840 Rognes (FR)** |
| (30) Priorité: **05.05.2006 FR 0604086** | (74) Mandataire: **Marchand, André et al OMNIPAT 24, Place des Martyrs de la Résistance F-13100 Aix-en-Provence (FR)** |
| (43) Date de publication de la demande: **21.01.2009 Bulletin 2009/04** | |
| (73) Titulaire: **Inside Contactless 13100 Aix en Provence (FR)** | (56) Documents cités: **EP-A2- 0 899 682**     **FR-A1- 2 831 305** **US-A1- 2005 133 605**    **US-B1- 6 778 070** |

**Description**

La présente invention concerne un procédé de transmission de données par modulation de charge, et un dispositif de transmission de données mettant en oeuvre ce procédé.

La présente invention concerne notamment les dispositifs de transmission de données sans contact par couplage inductif, ou dispositifs RFID (Radio Frequency Identification), tels ceux décrits par les normes ISO/IEC 14443 et ISO/IEC 15693. La présente invention concerne notamment les dispositifs de transmission de données sans contact de type passif, capables d'extraire une tension d'alimentation électrique d'un signal alternatif fourni par leur circuit d'antenne.

EP-A2-0 899 682 divulgue un dispositif de transmission de données sans contact comprenant un circuit d'antenne fournissant une tension alternative en présence d'un champ d'excitation alternatif, et un transistor de modulation de charge ayant une borne de contrôle recevant un signal de modulation de charge présentant au moins un état bas et un état haut, et une borne de conduction recevant la tension alternative. Ce dispositif comprend aussi un circuit redresseur pour produire, à partir de la tension alternative, une tension continue non survoltée, un circuit de contrôle et un circuit survolteur pour fournir une tension continue survoltée supérieure à une valeur crête de la tension alternative. Le circuit de contrôle est alimenté électriquement par la tension continue survoltée et fournit un signal de modulation de charge qui présente à l'état haut un niveau de tension survolté. Ce signal de modulation de charge est appliqué à la borne de contrôle du transistor de modulation de charge.

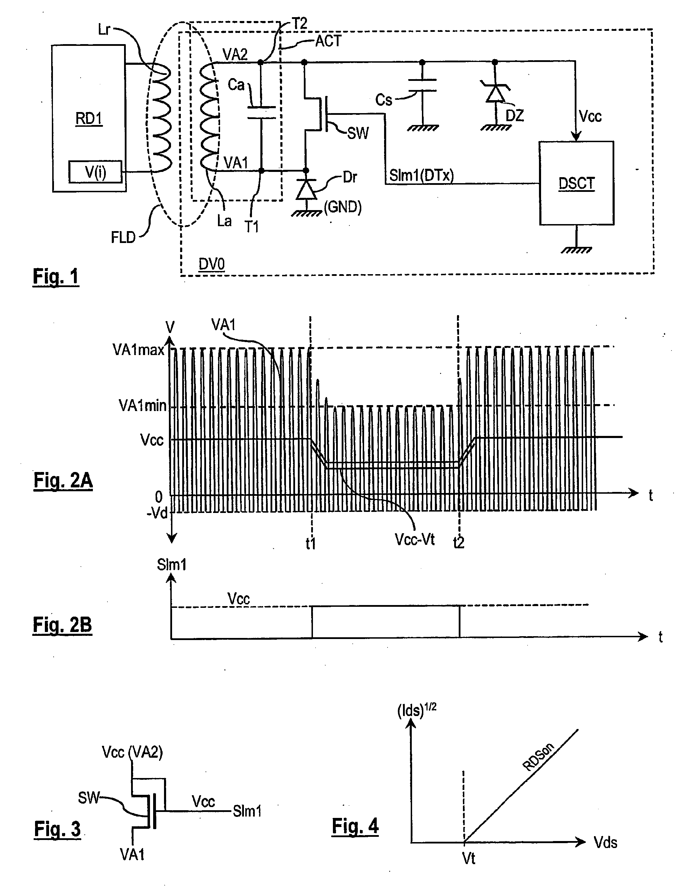

La figure 1 représente le schéma de base classique d'un dispositif de transmission de données sans contact DV0 de type passif prévu pour émettre des données par couplage inductif et modulation de charge. Un tel dispositif sera désigné "dispositif sans contact" dans ce qui suit dans un souci de simplification du langage. Le dispositif DV0 comprend un circuit d'antenne accordé ACT, un transistor de modulation de charge SW et un circuit émetteur de données DSCT. Le circuit d'antenne ACT comprend une bobine d'antenne La et un condensateur Ca en parallèle avec la bobine d'antenne.

Le transistor de modulation de charge SW, ici un transistor MOS, présente une première borne de conduction (source) connectée à une borne T1 du circuit d'antenne et un second borne de conduction (drain) connectée à une borne T2 du circuit d'antenne. Une diode de redressement Dr est connectée entre la borne T1 et la masse du dispositif (GND). Un condensateur de lissage Cs et une diode Zener DZ en parallèle sont connectés entre la borne T2 du circuit d'antenne et la masse.

Le dispositif sans contact DV0 est activé par un champ magnétique FLD oscillant à une fréquence de travail égale ou proche d'une fréquence d'accord du circuit d'antenne. Le champ magnétique FLD est par exemple émis par un lecteur RD1, qui est équipé à cet effet d'une bobine d'antenne Lr et applique à celle-ci un signal d'excitation oscillant à la fréquence de travail. Cette fréquence de travail est par exemple de 13,56 MHz dans un dispositif conforme à l'une des normes ISO précitées.

Par phénomène de couplage inductif, un signal d'antenne alternatif apparaît dans la bobine d'antenne La du dispositif DV0. Ce signal d'antenne fait apparaître un signal VA1 sur la borne T1 du circuit d'antenne et un signal VA2 sur la borne T2 du circuit d'antenne.

En référence à la masse du dispositif DV0 le signal VA1 est un signal alternatif redressé semi-alternance et le signal VA2 est un signal quasi continu lissé par le condensateur. Cs et écrêté par la diode DZ, par exemple au voisinage de 5 V. Le dispositif sans contact DV0 étant supposé être ici purement passif, le signal redressé VA1 est utilisé comme tension d'alimentation continue Vcc du circuit émetteur de données DSCT.

Une telle architecture de base de dispositif sans contact permet de réaliser divers objets portatifs électroniques sans contact tels des cartes à puce sans contact, des badges d'identification sans contact, des étiquettes électroniques, etc.

Pour envoyer des données DTx au lecteur RD1, le dispositif DSCT applique au transistor SW un signal de modulation de charge binaire Slm1 qui est généré en fonction des données DTx, celles-ci étant généralement codées suivant un protocole de codage prédéterminé (NRZ, Manchester, BPSK, etc.). Lorsque le signal Slm1 est à "1", il est égal ou sensiblement égal à la tension Vcc (en négligeant les pertes dans des éléments de commutation interne au circuit DSCT). Le transistor SW est alors passant et présente une résistance série déterminée (résistance drain-source RDSon). Le circuit d'antenne est donc court-circuité par cette résistance, qui est généralement de l'ordre de quelques centaines d'ohms. Ce court-circuit (court-circuit partiel, la résistance série n'étant pas nulle) a pour effet de moduler l'impédance du circuit d'antenne et cette modulation d'impédance se répercute par couplage inductif dans le signal d'antenne du lecteur RD1. Ce dernier peut ainsi, grâce à un circuit de filtrage approprié, extraire le signal de modulation de son propre signal d'antenne et en déduire, après démodulation et décodage, les données DTx envoyées par le dispositif DV0.

La figure 2A représente la forme du signal VA1 lorsque le transistor SW est bloqué, et la forme du signal VA1 lorsque le transistor SW est passant, pendant une période de modulation de charge s'étendant entre deux instants t1 et t2. L'aspect de la tension d'alimentation Vcc est également représenté. La figure 2B représente la forme du signal de modulation de charge Slm1, qui est à 1 (Vcc, état haut) entre les instants t1 et t2 et à 0 (masse, état bas) en dehors des périodes de modulation de charge.

En dehors des périodes de modulation de charge, l'amplitude du signal VA1 est maximale et le signal VA1 oscille entre une valeur crête VA1max et une valeur minimale négative -Vd égale en valeur absolue à la tension de seuil Vd de la diode de redressement Dr. La tension d'alimentation Vcc est également maximale. Pendant la période de modulation de charge s'étendant entre les instants t1 et t2, la valeur crête du signal VA1 baisse sensiblement et ne dépasse pas une valeur VA1min, tandis que la tension d'alimentation Vcc baisse également. Ces deux phénomènes sont provoqués par l'altération de l'amplitude du champ magnétique FLD, causée par la modification de l'impédance du circuit d'antenne du lecteur RD1 en réponse au court-circuit appliqué au circuit d'antenne du dispositif DV0.

Cette structure de dispositif sans contact présente l'avantage que la profondeur de la modulation de charge, soit la différence entre les amplitudes VA1max et VA1min du signal alternatif VA1, est relativement faible et préserve la réception de l'énergie électrique pendant les périodes de modulation.

Il s'est toutefois avéré que cet avantage peut devenir un inconvénient dans certaines applications où une profondeur de modulation de charge plus importante est souhaitée, afin d'augmenter la distance de communication entre le lecteur RD1 et le dispositif sans contact DV0. En effet l'amplitude du signal de modulation de charge détectée par le lecteur RD1 est également fonction de la distance entre le lecteur RD1 et le dispositif sans contact DV0 : plus la distance de communication est grande, plus l'image du signal de modulation de charge mélangée au signal d'antenne du lecteur est faible car le couplage inductif est plus faible. Dans ces conditions, la distance de communication ne peut être augmentée qu'en augmentant la profondeur de modulation de charge. Pour mesurer l'impact de la modulation de charge dans le lecteur, on mesure la variation du courant d'antenne i dans le lecteur en choisissant une distance lecteur/dispositif déterminée. La mesure de variation de courant est effectuée au moyen d'une résistance série donnant une tension V(i). Si une variation de tension minimale V(i)min n'est pas atteinte, la profondeur de modulation est considérée comme insuffisante.

La présente invention vise ainsi un moyen permettant d'augmenter la profondeur de modulation de charge sans pénaliser de façon rédhibitoire la réception de l'énergie, essentielle pour fournir la tension d'alimentation Vcc à un dispositif sans contact purement passif ou pour fournir une tension d'alimentation auxiliaire à un dispositif sans contact semi-passif.

Cet objectif est atteint par la prévision d'un dispositif de transmission de données sans contact comprenant

- un circuit d'antenne fournissant une tension alternative en présence d'un champ d'excitation alternatif,
- un transistor de modulation de charge ayant une borne de contrôle recevant un signal de modulation de charge présentant au moins un état bas et un état haut, et une borne de conduction recevant la tension alternative,

- un circuit redresseur pour produire, à partir de la tension alternative, une tension continue non survoltée,
- un circuit de contrôle alimenté électriquement par la tension continue non survoltée, pour fournir un premier signal de modulation de charge qui présente à l'état haut un niveau de tension non survolté, et
- un circuit survolteur pour fournir une tension continue survoltée supérieure à une valeur crête de la tension alternative,

caractérisé, en ce qu'il comprend un circuit d'adaptation en tension pour transformer le premier signal de modulation de charge en un second signal de modulation de charge qui présente à l'état haut un niveau de tension égal à la tension continue survoltée, le second signal de modulation de charge étant appliqué à la borne de contrôle du transistor de modulation de charge.

Selon un mode de réalisation, le circuit survolteur fournit la tension continue survoltée à partir de la tension alternative fournie par le circuit d'antenne.

Selon un mode de réalisation, le circuit survolteur fournit la tension continue survoltée à partir de la tension continue non survoltée.

Selon un mode de réalisation, le circuit survolteur comprend au moins un étage d'une pompe de charge.

Selon un mode de réalisation, la pompe de charge fournit également une tension d'effacement ou de programmation d'une mémoire effaçable et programmable électriquement.

Selon un mode de réalisation, la pompe de charge reçoit en tant que signal de pompage la tension alternative fournie par le circuit d'antenne.

Selon un mode de réalisation, le transistor de modulation de charge est un transistor MOS.

Selon un mode de réalisation, -le circuit d'antenne comprend une bobine d'antenne qui fournit la tension alternative en présence d'un champ magnétique alternatif.

Selon un mode de réalisation, une première borne du circuit d'antenne est connectée à une borne d'une diode de redressement dont l'autre borne reçoit un potentiel de référence, une seconde borne du circuit d'antenne est connectée à une borne d'un condensateur de lissage dont l'autre borne reçoit le potentiel de référence, la tension alternative est présente sur la première borne du circuit d'antenne, la seconde borne du circuit d'antenne présente une tension redressée relativement au potentiel de référence, et le transistor de modulation reçoit la tension redressée sur une première borne de conduction et la tension alternative sur une autre borne de conduction.

L'invention concerne également un objet portatif électronique, notamment carte à puce ou étiquette électronique, comprenant un dispositif selon l'invention.

L'invention concerne également un procédé de transmission de données sans contact par couplage inductif et modulation de charge, comprenant les étapes consistant à :

- prévoir un circuit d'antenne fournissant une tension alternative en présence d'un champ d'excitation alternatif,
- prévoir un transistor de modulation de charge ayant une borne de contrôle pour recevoir un signal de modulation de charge présentant au moins un état bas et un état haut, et une borne de conduction reliée à une borne du circuit d'antenne et recevant la tension alternative fournie par le circuit d'antenne,
- prévoir un circuit redresseur pour produire, à partir de la tension alternative, une tension continue non survoltée,
- prévoir un circuit de contrôle alimenté électriquement par la tension continue non survoltée, pour fournir un premier signal de modulation de charge qui présente à l'état haut un niveau de tension non survolté,
- produire une tension continue survoltée supérieure à la valeur crête de la tension alternative,

le procédé étant caractérisé en ce qu'il comprend les étapes suivantes:

- transformer le premier signal de modulation de charge en un second signal de modulation de charge qui présente à l'état haut un niveau de tension égal à la tension continue survoltée, et
- appliquer le second signal de modulation de charge à la borne de contrôle du transistor de modulation de charge.

Selon un mode de réalisation, la tension continue survoltée est produite à partir de la tension alternative fournie par le circuit d'antenne.

Selon un mode de réalisation, la tension continue survoltée est produite à partir de la tension continue non survoltée.

Selon un mode de réalisation, au moins un étage d'une pompe de charge est utilisé pour produire la tension survoltée.

Selon un mode de réalisation, la pompe de charge est également utilisée pour produire une tension d'effacement ou de programmation d'une mémoire effaçable et programmable électriquement.

Selon un mode de réalisation, la tension alternative fournie par le circuit d'antenne est utilisée en tant que signal de pompage de la pompe de charge.

Selon un mode de réalisation, un transistor MOS est utilisé en tant que transistor de modulation de charge.

Selon un mode de réalisation, le procédé comprend les étapes suivantes : connecter une première borne du circuit d'antenne à une borne d'une diode de redressement, appliquer un potentiel de référence à l'autre borne de la diode de redressement, connecter une seconde borne du circuit d'antenne à une borne d'un condensateur de lissage, appliquer le potentiel de référence à l'autre borne du condensateur de lissage, de telle sorte que la tension alternative apparaît sur la première borne du circuit d'antenne et qu'une tension redressée relativement au potentiel de référence apparaît sur la seconde borne du circuit d'antenne, et appliquer la tension redressée sur une borne de conduction du transistor de modulation et appliquer la tension alternative sur une autre borne de conduction du transistor.

Ces objets, caractéristiques et avantages ainsi que d'autres de la présente invention seront exposés plus en détail dans la description suivante de divers exemples de réalisation de dispositifs de transmission de données sans contact selon l'invention, faite à titre non limitatif en relation avec les figures jointes parmi lesquelles :

- la figure 1 précédemment décrite représente une structure classique de dispositif de transmission de données sans contact,
- la figure 2A précédemment décrite représente des signaux apparaissant dans le dispositif de la figure 1 en présence d'un champ d'excitation alternatif,
- la figure 2B précédemment décrite représente un signal de modulation de charge classique,
- la figure 3 est le schéma équivalent de l'interrupteur de modulation de charge pendant des périodes de modulation de charge,
- la figure 4 représente la fonction de transconductance de l'interrupteur de modulation de charge de la figure 3,
- la figure 5 représente la structure générale d'un dispositif de transmission de données sans contact selon l'invention,
- la figure 6 est le schéma équivalent d'un interrupteur de modulation de charge présent dans le dispositif de la figure 5 pendant des périodes de modulation de charge,
- la figure 7A représente des signaux apparaissant dans le dispositif de la figure 5 en présence d'un champ d'excitation alternatif,
- la figure 7B représente un signal de modulation de charge selon l'invention,
- la figure 8 représente un premier exemple de réalisation du dispositif de la figure 5,
- la figure 9 représente la structure d'une pompe de charge présente dans le dispositif de la figure 8,
- la figure 10 représente un second exemple de réalisation du dispositif de la figure 5,
- la figure 11 représente la structure d'une pompe de charge présente dans le dispositif de la figure 10,
- la figure 12 représente un troisième exemple de réalisation du dispositif de la figure 5,
- la figure 13 représente la structure d'une pompe de charge présente dans le dispositif de la figure 12,
- la figure 14 représente un quatrième exemple de réalisation du dispositif de la figure 5,
- la figure 15 représente la structure d'une pompe de charge présente dans le dispositif de la figure 14, et
- la figure 16 représente un objet portatif équipé d'un dispositif de transmission de données sans contact selon l'invention.

Comme indiqué plus haut, la présente invention vise un moyen permettant d'augmenter la profondeur de modulation de charge dans un dispositif de transmission de données sans contact du type représenté en figure 1, sans pénaliser de façon rédhibitoire la réception de l'énergie, essentielle pour fournir la tension d'alimentation Vcc dans un dispositif passif ou semi-passif (ayant une source d'énergie d'appoint).

Pour atteindre cet objectif, la présente invention se base tout d'abord sur une analyse du mécanisme de modulation de charge par le transistor SW configuré de la manière représentée en figure 1. La figure 3 est le schéma équivalent du transistor SW pendant la période de modulation de charge, lorsque le signal de modulation de charge Slm1 est égal à 1, soit la tension Vcc (fig. 2B). Le transistor reçoit la tension Vcc sur sa borne de contrôle, ici sa borne de grille, et reçoit également la tension Vcc (VA2) sur une borne de conduction, ici sa borne de drain, tandis que son autre borne de conduction, ici sa borne de source, reçoit la tension alternative VA1 semi-redressée dont la forme est représentée en figure 2A. Il apparaît ainsi que le transistor a sa borne de grille portée au même potentiel que sa borne de drain. Le schéma équivalent du transistor en figure 3 comprend ainsi un fil reliant la borne de grille et la borne de drain. Le transistor fonctionne comme une diode (régime de saturation) et sa fonction de transconductance est telle que représentée en figure 4, Vds étant la tension drain-source du transistor, Ids le courant drain-source traversant le transistor, Vt la tension de seuil du transistor, RDSon sa résistance drain-source dans l'état passant. Pour que le transistor soit passant, la condition suivante doit être atteinte :

$$Vcc-Vt > VA1$$

soit :

$$VA1 < Vcc-Vt$$

Ainsi, le transistor SW est passant quand la tension alternative est inférieure à Vcc-Vt et est bloqué dans le cas contraire. La zone de modulation de charge effective est donc réduite et s'étend entre la courbe Vcc-Vt représentée en figure 2A et la droite -Vd. En d'autres termes, lorsque le signal VA1 varie entre -Vd et VA1min, le transistor de modulation de charge est passant quand VA1 est inférieur à Vcc-Vt, puis se bloque lorsque VA1 devient supérieur à Vcc-Vt, puis est de nouveau passant lorsque VA1 redevient inférieur à Vcc-Vt, etc. On observe donc une alternance rapide entre l'état passant et l'état bloqué du transistor.

Pour obtenir une profondeur de modulation de charge plus importante sans sacrifier la réception de l'énergie, la présente invention propose d'appliquer à la borne de grille du transistor une tension continue qui est supérieure à la tension crête maximale VA1max de la tension alternative VA1. Dans ces conditions, le transistor n'est plus configuré en diode et est continuellement passant pendant les périodes de modulation de charge.

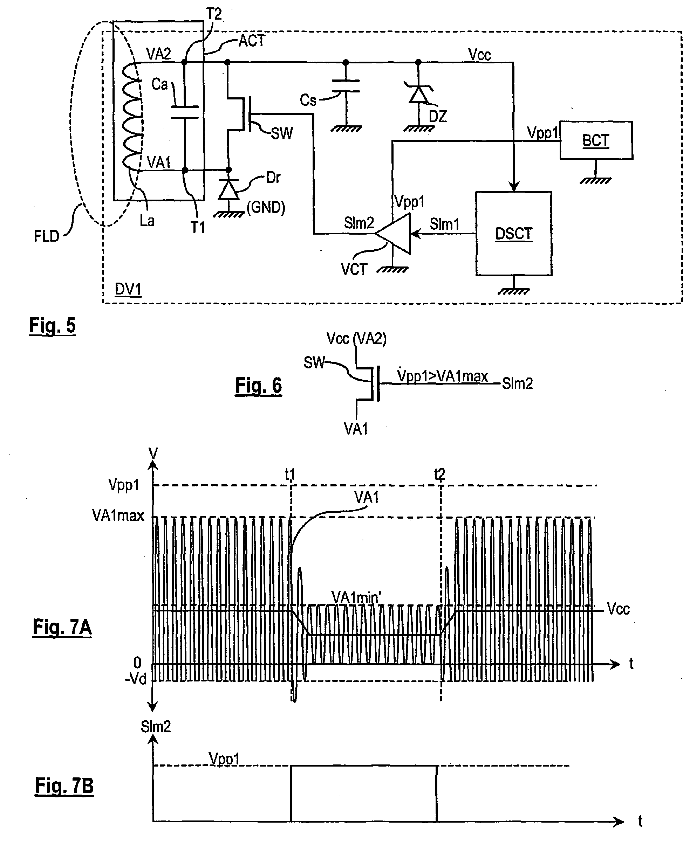

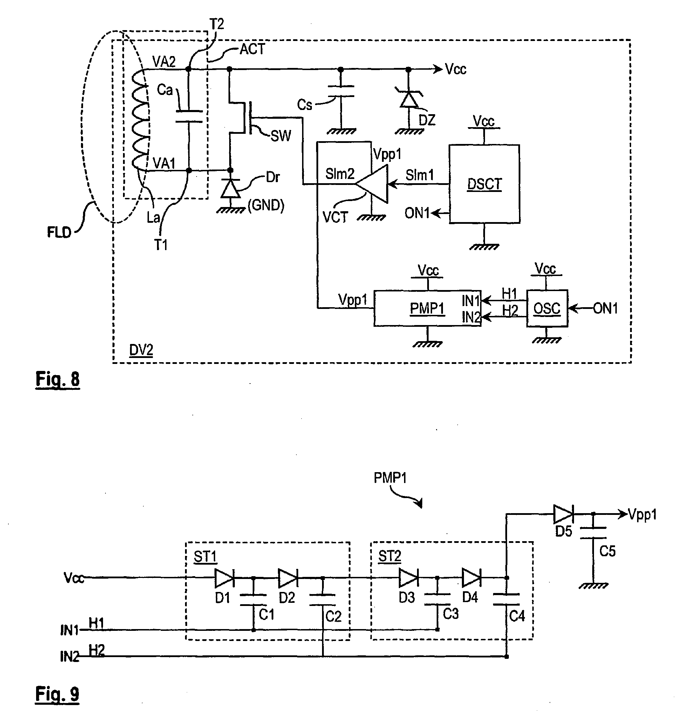

La figure 5 représente un dispositif de transmission de données sans contact DV1 selon l'invention. Le dispositif DV1 comprend tous les éléments du dispositif DV0 décrits plus haut, désignés par les mêmes références. On distingue ainsi le circuit d'antenne ACT comportant la bobine La et le condensateur Ca, la diode de redressement Dr reliée à la borne T1 du circuit d'antenne, le condensateur de lissage Cs et la diode d'écrêtage DZ reliés à la borne T2 du circuit d'antenne, le transistor de modulation de charge SW connecté entre les bornes T1 et T2, ainsi que le circuit d'émission de données DSCT alimenté par la tension quasi continue VA2 présente sur la borne T2, utilisée en tant que tension d'alimentation Vcc. On suppose ici, ainsi que sur les figures 8, 10, 12, 14 décrites plus loin, que le dispositif selon l'invention est en présence d'un champ magnétique alternatif FLD émis par le lecteur RD1 représenté en figure 1, qui n'a pas été de nouveau représenté sur ces figures.

Selon l'invention, le dispositif DV1 comprend en outre un circuit survolteur BCT et un circuit d'adaptation en tension VCT. Le circuit survolteur BCT fournit une tension Vpp1 qui est supérieure à la valeur crête VA1max que peut présenter le signal VA1 en dehors des périodes de modulation de charge. Le circuit VCT est alimenté par la tension Vpp1 et reçoit le signal de modulation de charge Slm1 fourni par le circuit émetteur de données DSCT. Comme indiqué plus haut, le niveau haut du signal Slml correspond sensiblement à la tension Vcc (en négligeant les pertes dans des éléments de commutation du circuit DSCT). Le circuit VCT convertit le signal Slml en un signal de modulation de charge Slm2. Le circuit VCT peut être tout type connu d'adaptateur en tension, par exemple un amplificateur suiveur, une porte logique alimentée par la tension Vpp1, un trigger ou un bistable alimenté par la tension Vpp1,...

Ainsi, le signal Slm2 est l'image du signal Slml mais le niveau haut de ce signal est formé par la tension Vpp1 et non par la tension Vcc. Le niveau bas du signal Slm2 est de préférence identique au niveau bas du signal Slm1, et est ici le potentiel de la masse (GND). Le transistor fonctionne ainsi en régime linéaire, comme représenté en figure 6, sa tension de grille Vpp1 étant toujours supérieure à sa tension drain-source (Vcc-VA1). Le transistor est ainsi continuellement passant lorsque le signal Slm2 est égal à 1 (Vpp1).

La figure 7A représente l'aspect du signal VA1 et de la tension Vcc pendant une période de modulation de charge s'étendant entre des instants t1 et t2, et la figure 7B représente la forme du signal Slm2, égal à Vpp1 entre les instant t1 et t2. En comparant la figure 7A à la figure 2A, il apparaît que le signal alternatif VA1 oscille entre la tension de seuil de la diode -Vd et une tension crête VA1min' qui est nettement inférieure à la tension crête VA1min de la figure 2A. Toutefois, et contre toute attente, la réception de l'énergie est faiblement affectée par l'augmentation de la profondeur de modulation de charge, et la tension d'alimentation Vcc subit une baisse qui est pratiquement la même que la baisse représentée sur la figure 2A, à courant consommé identique (les figures 2A et 7A représentent le cas où l'énergie électrique consommée sur la ligne d'alimentation véhiculant la tension Vcc est inférieure à l'énergie extraite, la tension Vcc atteignant un plateau inférieur). Ce résultat surprenant et apparemment contradictoire avec le fait d'augmenter la profondeur de modulation de charge peut s'expliquer, en termes simples, par le fait que de l'énergie électrique est renvoyée par le transistor SW sur la borne T2 du circuit d'antenne (borne fournissant Vcc) lorsque l'amplitude du signal AC1 est supérieure à Vcc-Vt., le transistor SW étant passant au lieu d'être bloqué. En effet, pendant les périodes de modulation de charge, le transistor de modulation de charge ne fonctionne plus comme une diode et est équivalent à une résistance.

En pratique, la tension Vpp1 fournie par le circuit survolteur BCT peut-être produite :

> 1) par survoltage d'une tension fournie par une source de tension locale, telle une pile électrique, si le dispositif est du type semi-autonome (semi-passif),
> 2) par survoltage de la tension Vcc ou de l'un des signaux VA1, VA2 fournis par le circuit d'antenne, si le dispositif est du type entièrement passif, sachant que le signal VA2 peut être alternatif si le redressement n'est pas effectué aux bornes du circuit d'antenne (par exemple dans le cas d'un redressement bi-alternance effectué par pont de diode).

On décrira dans ce qui suit des exemples de réalisation de dispositifs sans contact DV2, DV3, DV4, DV5 selon l'invention, de type purement passif, représentés sur les figures 8, 10, 12 et 14, respectivement.

Le dispositif sans contact DV2 représenté en figure 8 comprend une pompe de charge PMP1 pour fournir la tension Vpp1 au circuit d'adaptation en tension VCT. La pompe de charge est alimentée par la tension Vcc et reçoit sur des entrées IN1, IN2 deux signaux de pompage en opposition de phase fournis par un oscillateur OSC. L'oscillateur est de préférence de construction très simple et peu coûteuse. Il s'agit par exemple d'un oscillateur en anneau, formé par un nombre impair de portes inverseuses en cascade, la sortie de la dernière porte étant ramenée sur l'entrée de la première porte. L'oscillateur est activé par un signal ON1 fourni par le circuit d'émission de données DSCT lorsque le signal de modulation Slm2 doit être appliqué à l'interrupteur de modulation SW.

Comme représenté en figure 9 la pompe de charge PMP1 comprend par exemple deux étages de pompage ST1, ST2 en cascade et un étage de sortie comportant une diode D5 et un condensateur C5. L'étage ST1 comprend deux diodes D1, D2 et deux condensateurs C1, C2. L'étage ST2 comprend deux diodes D3, D4 et deux condensateurs C3, C4. La diode D1 reçoit la tension Vcc sur son anode et sa cathode est connectée à l'anode du condensateur C1 et à l'anode de la diode D2. La cathode de la diode D2 est connectée à l'anode du condensateur C2 et à l'anode de la diode D3. La cathode de la diode D3 est connectée à l'anode du condensateur C3 et à l'anode de la diode D4. La cathode de la diode D4 est connectée à l'anode du condensateur C4 et à l'anode de la diode D5. La cathode de la diode D5 est connectée à l'anode du condensateur C5 et fournit la tension Vpp1. La cathode du condensateur C5 est connectée à la masse, les cathodes des condensateurs C1, C3 reçoivent le signal de pompage H1 et les cathodes des condensateur C2, C4 reçoivent le signal de pompage H2.

La tension Vpp1 est par exemple de 12 à 13 V pour une tension Vcc égale à 5 V et des signaux de pompage ayant un niveau haut égal à 5 V et un niveau bas égal à 0 V.

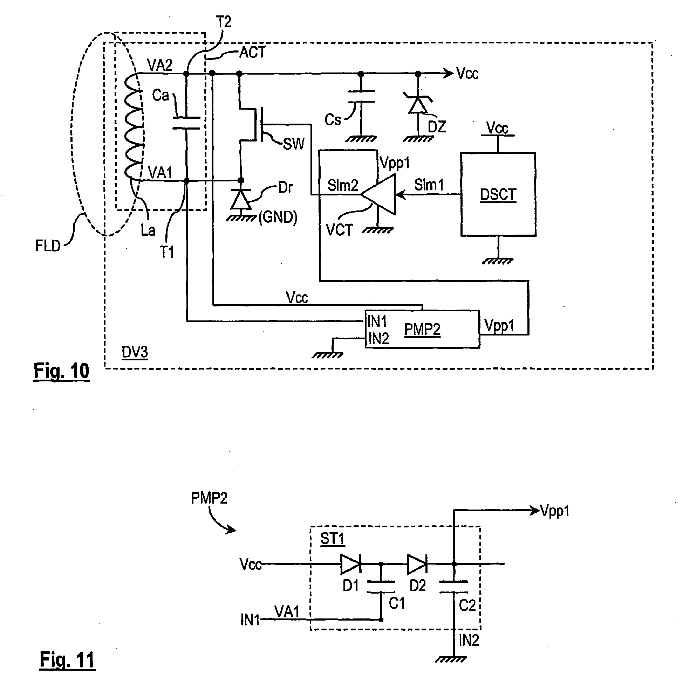

Le dispositif sans contact DV3 représenté en figure 10 comprend une pompe de charge PMP2 pour fournir la tension Vpp1 au circuit d'adaptation en tension VCT. La pompe de charge est alimentée par la tension Vcc et reçoit sur une entrée IN1 le signal alternatif semi-alternance VA1 prélevé sur la borne T1 du circuit d'antenne, tandis que son autre entrée de pompage IN2 est connectée à la masse.

La pompe de charge PMP2 est par exemple réalisée comme représenté en figure 11. Elle ne comprend qu'un simple étage de pompage ST1 identique à celui de la pompe de charge PMP1. La diode D1 reçoit la tension Vcc sur son anode et sa cathode est connectée à l'anode du condensateur C1 et à l'anode de la diode D2. La cathode de la diode D2 est connectée à l'anode du condensateur C2 et fournit la tension Vpp1. La cathode du condensateur C1 reçoit le signal alternatif VA1 et la cathode du condensateur C2 est connectée à la masse. La tension Vpp1 est par exemple de 12 à 13 V pour une tension Vcc égale à 5 V et un signal de pompage VA1 ayant une amplitude de l'ordre de 8 à 10 V.

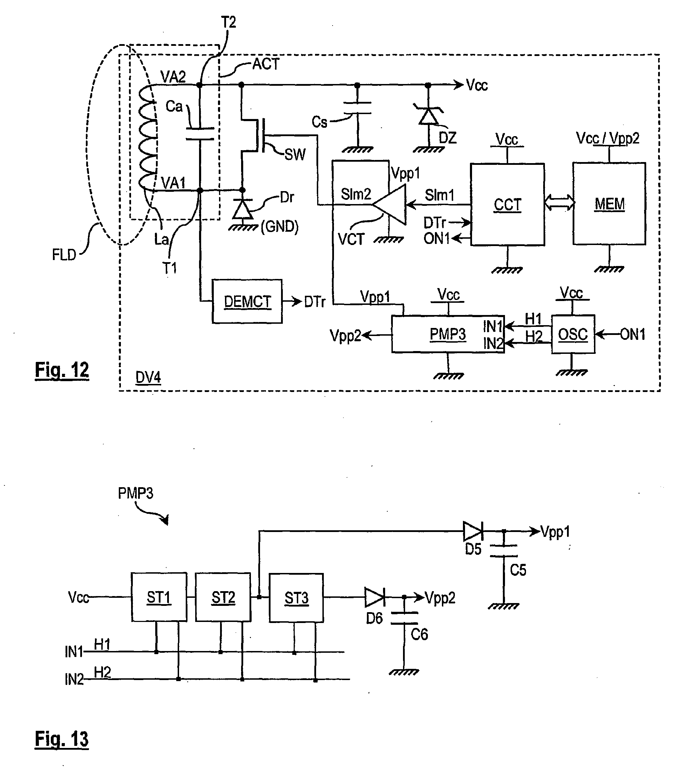

Le dispositif sans contact DV4 représenté en figure 12 comprend à la place du circuit DSCT un circuit de contrôle CCT à microprocesseur ou à logique câblée, prévu pour exécuter des commandes de haut niveau envoyées par le lecteur RD1 (Cf. fig. 1). Le circuit de contrôle CCT est équipé d'une mémoire MEM effaçable et programmable électriquement (EEPROM) et les commandes sont par exemple des commandes d'écriture ou de lecture de la mémoire, des commandes anticollision, des commandes d'identification, etc.. Le dispositif DV4 comprend également un circuit démodulateur DEMCT ayant une entrée connectée à la borne T1 du circuit d'antenne, et une sortie fournissant des données DTr envoyées par le lecteur RD1 par modulation de l'amplitude du champ magnétique FLD. Ces données DTr sont extraites du signal alternatif VA1 par un circuit de filtrage présent dans le démodulateur et permettant d'extraire l'enveloppe de ce signal en supprimant la porteuse du champ magnétique. Elles sont ensuite décodées par le circuit de contrôle CCT. Les données DTr forment les commandes susmentionnées et peuvent comprendre des données d'application à traiter, notamment des données à écrire dans la mémoire.MEM..

Une pompe de charge PMP3 est prévue pour fournir une haute tension Vpp2 d'effacement et de programmation de la mémoire MEM, de l'ordre de 12 V à 15 V. La pompe de charge PMP3 reçoit sur des entrées IN1, IN2 des signaux de pompage H1, H2 fournis par un oscillateur OSC similaire à celui décrit plus haut, activé par un signal ON1 fournit par le circuit de contrôle CCT. Avantageusement, la pompe de charge est également utilisée pour fournir la tension Vpp1 du signal de modulation de charge Slm2.

Comme représenté sur la figure 13, la pompe de charge PMP3 comprend par exemple trois étages de pompage ST1, ST2, ST3 en cascade, un premier étage de sortie comprenant une diode D5 et un condensateur C5 et un second étage de sortie comprenant une diode D6 et un condensateur C6. Les étages ST1, ST2 et le premier étage de sortie sont agencés comme décrit en relation avec la figure 9 et forment l'équivalent de la pompe PMP1, la cathode de la diode D5 fournissant la tension Vpp1. L'étage ST3 est agencé en cascade avec l'étage ST2 et sa sortie est reliée à l'anode de la diode D6 dont la cathode fournit la tension Vpp2 et est reliée à l'anode du condensateur C6, dont la cathode est reliée à la masse.

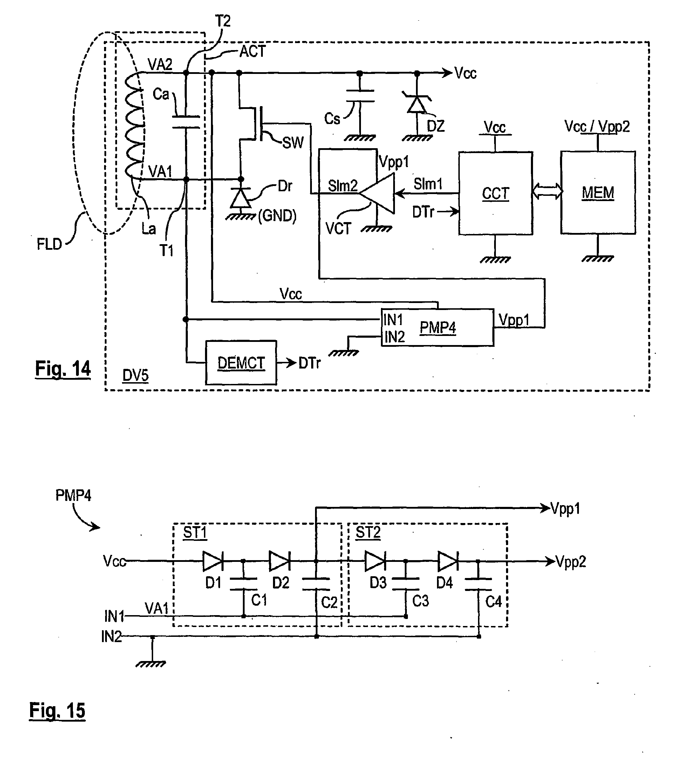

Le dispositif sans contact DV5 représenté sur la figure 14 est similaire au dispositif DV4 et se distingue uniquement de celui-ci en ce qu'il comporte une pompe de charge PMP4 recevant comme signal de pompage le signal alternatif VA1 prélevé sur la borne T1 du circuit d'antenne. Le signal VA1 est appliqué sur une entrée IN1 de la pompe de charge et une entrée IN2 de la pompe de charge est connecte à la masse.

La pompe de charge PMP4 comprend deux étages de pompage en cascade ST1, ST2 activés ici comme l'étage de pompage ST1 de la pompe de charge PMP2 (fig. 11). Ainsi, dans l'étage ST1, la diode D1 reçoit la tension Vcc sur son anode et sa cathode est connectée à l'anode du condensateur C1 et à l'anode de la diode D2. La cathode de la diode D2 est connectée à l'anode du condensateur C2 et fournit la tension Vpp1. La cathode du condensateur C1 reçoit le signal alternatif VA1 et la cathode du condensateur C2 est connectée à la masse. Dans l'étage ST2, l'anode de la diode D3 est connectée à la cathode de la diode D2 de l'étage ST1 et reçoit la tension Vpp1. La cathode de la diode D3 est connectée à l'anode du condensateur C3 et à l'anode de la diode D4. La cathode de la diode D4 est connectée à l'anode du condensateur C4 et fournit la tension Vpp2. La cathode du condensateur C3 reçoit le signal alternatif VA1 et la cathode du condensateur C2 est connectée à la masse.

Il apparaîtra clairement à l'homme de l'art que la présente invention est susceptible de diverses autres variantes de réalisation.

Notamment, si les signaux VA1, VA2 sont tous deux alternatifs (redressement bi-alternance par pont de diode), le pompage de charges peut être effectué en utilisant ces deux signaux comme signaux de pompage H1, H2 et en connectant l'entrée de la pompe de charge à la masse.

Par ailleurs, le transistor de modulation de charge peut présenter une résistance série intrinsèque très faible ou à tout le moins trop faible pour moduler suffisamment la charge du circuit d'antenne. Dans ce cas, une impédance de charge (résistance, capacité...) peut être agencée en série avec le transistor de modulation. Cette impédance de charge assure la modulation de la charge du circuit d'antenne lorsque le transistor de modulation de charge est passant, celui-ci étant dans ce cas utilisé comme un simple interrupteur.

Également, le circuit d'adaptation en tension VCT peut être un circuit inverseur. Dans ce cas, le signal Slm2 est l'image inversée du signal Slm1 et est au niveau haut, soit la tension Vpp1, quand le signal Slm1 est au niveau bas.

La présente invention est également susceptible de diverses applications. Les dispositifs DV2, DV3 sont des dispositifs purement émissifs et permettent de réaliser des objets portatifs sans contact de type balise ou de type identificateur, émettant selon des intervalles de temps déterminés des données inscrites dans le circuit DSCT. Les dispositifs DV4, DV5 sont capables de recevoir et d'exécuter des commandes d'écriture et de lecture de leur mémoire et permettent de réaliser divers objets portatifs fonctionnant sans contact, comme des cartes à puce sans contact, des badges électroniques sans contact, des étiquettes électroniques sans contact, etc. Les divers éléments constituant les dispositifs DV1 à DV5 sont généralement intégrés sur une puce de semi-conducteur, hormis la bobine d'antenne qui est généralement agencée dans ou sur le support recevant la puce de semi-conducteur, ou est disposée sur la puce elle-même ("coil on chip").

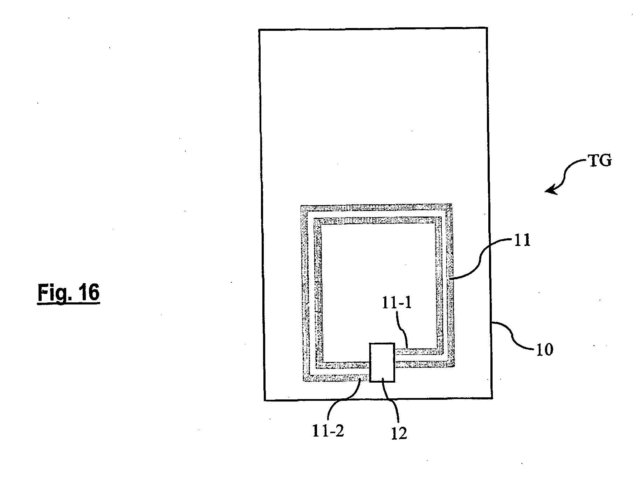

A titre d'exemple, la figure 16 représente une étiquette électronique TG comprenant un substrat 10 en un matériau isolant (papier, feuille plastique, etc.), une bobine d'antenne 11 et une puce de semi-conducteur 12 intégrant les éléments constitutifs de l'un des dispositifs DV1 à DV5. La bobine d'antenne 11 est réalisée par jet d'encre ou par gravure d'un matériau conducteur. La face inférieure de la puce 12 comprend des contacts électriques (non représentés) qui sont connectés à des extrémités 11-1, 11-2 de la bobine d'antenne.

La présente invention n'est pas limitée aux circuits à couplage inductif et est applicable de façon générale à tout dispositif équipé d'un circuit d'antenne et recevant un signal alternatif induit permettant de produire une tension d'alimentation. La présente invention s'applique notamment aux circuits sans contact à couplage électrique ayant un circuit d'antenne conçu pour recevoir un champ électrique UHF et qui modulent l'impédance de leur circuit d'antenne, pour moduler son coefficient de réflexion, lorsque des données sont émises.

**Revendications**

1. Dispositif de transmission de données sans contact (DV1, DV2, DV3, DV4, DV5) comprenant

    - un circuit d'antenne (ACT) fournissant une tension alternative (VA1) en présence d'un champ d'excitation alternatif (FLD),
    - un transistor de modulation de charge (SW) ayant une borne de contrôlé recevant un signal de modulation de charge présentant au moins un état bas et un état haut, et une borne de conduction recevant la tension alternative (VA1),
    - un circuit redresseur (Dr, Cs, DZ) pour produire, à partir de la tension alternative (VA1), une tension continue non survoltée (Vcc),
    - un circuit de contrôle (DSCT, CCT) alimenté électriquement par la tension continue non survoltée (Vcc), pour fournir un premier signal de modulation de charge (Slm1) qui présente à l'état haut un niveau de tension non survolté (Vcc), et
    - un circuit survolteur (BCT, PMP1-PMP4) pour fournir une tension continue survoltée (Vpp1) supérieure à une valeur crête (VA1max) de la tension alternative (VA1),

    **caractérisé en ce qu'**il comprend un circuit d'adaptation en tension (VCT) pour transformer le premier signal de modulation de charge (Slm1) en un second signal de modulation de charge (Slm2) qui présente à l'état haut un niveau de tension égal à la tension continue survoltée (Vpp1), le second signal de modulation de charge étant appliqué à la borne de contrôle du transistor de modulation de charge (SW).

2. Dispositif selon la revendication 1, dans lequel le circuit survolteur (BCT, PMP1-PMP4) fournit la tension continue survoltée (Vpp1) à partir de la tension alternative (VA1) fournie par le circuit d'antenne (ACT).

3. Dispositif selon la revendication 1, dans lequel le circuit survolteur (BCT, PMP1-PMP4) fournit la tension continue survoltée (Vpp1) à partir de la tension continue non survoltée (Vcc).

4. Dispositif selon l'une des revendications 2 et 3, dans lequel le circuit survolteur comprend au moins un étage d'une pompe de charge (PMP1-PMP4).

5. Dispositif selon la revendication 4, dans lequel la pompe de charge (PMP3, PMP4) fournit également une tension (Vpp2) d'effacement ou de programmation d'une mémoire effaçable et programmable électriquement.

6. Dispositif selon l'une des revendications 4 et 5, dans lequel la pompe de charge (PMP2, PMP4) reçoit en tant que signal de pompage la tension alternative (VA1) fournie par le circuit d'antenne.

7. Dispositif selon l'une des revendications 1 à 6, dans lequel le transistor de modulation de charge (SW) est un transistor MOS.

8. Dispositif selon l'une des revendications 1 à 7, dans lequel le circuit d'antenne (ACT) comprend une bobine d'antenne (La) qui fournit la tension alternative (VA1) en présence d'un champ magnétique alternatif (FLD).

9. Dispositif selon l'une des revendications 1 à 8, dans lequel :

    - une première borne (T1) du circuit d'antenne est connectée à une borne d'une diode de redressement (Dr) dont l'autre borne reçoit un potentiel de référence (GND),
    - une seconde borne (T2) du circuit d'antenne est connectée à une borne d'un condensateur de lissage (Cs) dont l'autre borne reçoit le potentiel de référence,
    - la tension alternative (VA1) est présente sur la première borne (T1) du circuit d'antenne,
    - la seconde borne (T2) du circuit d'antenne présente une tension redressée (AC2, Vcc) relativement au potentiel de référence, et
    - le transistor de modulation (SW) reçoit la tension redressée sur une première borne (T1) de conduction et la tension alternative (VA1) sur une autre borne de conduction.

10. Objet portatif électronique, notamment, carte à puce ou étiquette électronique (TG), comprenant un dispositif selon l'une des revendications 1 à 9.

11. Procédé de transmission de données sans contact par couplage inductif et modulation de charge, comprenant les étapes consistant à :

    - prévoir un circuit d'antenne (ACT) fournissant une tension alternative (VA1) en présence d'un champ d'excitation alternatif (FLD),
    - prévoir un transistor de modulation de charge (SW) ayant une borne de contrôle pour recevoir un signal de modulation de charge présentant au moins un état bas et un état haut, et une borne de conduction reliée à une borne (T1) du circuit d'antenne (ACT) et recevant la tension alternative (VA1) fournie par le circuit d'antenne,
- prévoir un circuit redresseur (Dr, Cs, DZ) pour produire, à partir de la tension alternative (VA1), une tension continue non survoltée (Vcc),
- prévoir un circuit de contrôle (DSCT, CCT) alimenté électriquement par la tension continue non survoltée (Vcc), pour fournir un premier signal de modulation de charge (Slm1) qui présente à l'état haut un niveau de tension non survolté (Vcc)
- produire une tension continue survoltée (Vpp1) supérieure à la valeur crête (VA1max) de la tension alternative (VA1),
le procédé étant **caractérisé en ce qu'**il comprend les étapes suivantes :
- transformer le premier signal de modulation de charge (Slm1) en un second signal de modulation de charge (Slm2) qui présente à l'état haut un niveau de tension égal à la tension continue survoltée (Vpp1), et
- appliquer le second signal de modulation de charge (Slm2) à la borne de contrôle du transistor de modulation de charge (SW).

**12.** Procédé selon la revendication 11, dans lequel la tension continue survoltée (Vpp1) est produite à partir de la tension alternative (VA1) fournie par le circuit d'antenne.

**13.** Procédé selon la revendication 12, dans lequel la tension continue survoltée (Vpp1) est produite à partir de la tension continue non survoltée (Vcc).

**14.** Procédé selon l'une des revendications 11 à 13, dans lequel au moins un étage d'une pompe de charge. (PMP1-PMP4) est utilisé pour produire la tension survoltée (Vpp1).

**15.** Procédé selon la revendications 14, dans lequel la pompe de charge (PMP3, PMP4) est également utilisée pour produire une tension (Vpp2) d'effacement ou de programmation d'une mémoire effaçable et programmable électriquement.

**16.** Procédé selon l'une des revendications 14 et 15, dans lequel la tension alternative (VA1) fournie par le circuit d'antenne (ACT) est utilisée en tant que signal de pompage de la pompe de charge (PMP2, PMP4).

**17.** Procédé selon l'une des revendications 11 à 16, dans lequel un transistor MOS est utilisé en tant que transistor de modulation de charge (SW).

**18.** Procédé selon l'une des revendications 11 à 17, comprenant les étapes suivantes :

- connecter une première borne (T1) du circuit d'antenne à une borne d'une diode de redressement (Dr),
- appliquer un potentiel de référence à l'autre borne de la diode de redressement (Dr),
- connecter une seconde borne (T2) du circuit d'antenne (ACT) à une borne d'un condensateur de lissage,
- appliquer le potentiel de référence à l'autre borne du condensateur de lissage,
de telle sorte que la tension alternative (VA1) apparaît sur la première borane (T1) du circuit d'antenne et qu'une tension redressée relativement au potentiel de référence apparaît sur la seconde borne (T2) du circuit d'antenne, et
- appliquer la tension redressée sur une borne de conduction du transistor de modulation de charge et appliquer la tension alternative (VA1) sur une autre borne de conduction du transistor.

**Claims**

**1.** A contactless data transmission device (DV1, DV2, DV3, DV4, DV5) comprising:

- an antenna circuit (ACT) supplying an alternating voltage (VA1) in the presence of an alternating exciting field (FLD),
- a load modulation transistor (SW) having a control terminal receiving a load modulation signal having at least one low state and one high state, and a conduction terminal receiving the alternating voltage (VA1),
- a rectifier circuit (Dr, Cs, DZ) to produce, from the alternating voltage (VA1), a not boosted direct voltage (Vcc),
- a control circuit (DSCT, CCT) electrically powered by the not boosted direct voltage (Vcc) to supply a first load modulation signal (Slml) which has in the high state a not boosted level of voltage (Vcc), and
- a booster circuit (BCT, PM1-PM4) to supply a boosted direct voltage (Vpp1) greater than a peak value (VA1max) of the alternating voltage (VA1),

**characterised in that** it comprises a voltage matching circuit (VCT) to transform the first load modulation signal (Slml) into a second load modulation signal (Slm2) which has in the high state a level of voltage equal to the boosted direct voltage (Vpp1), the second load modulation signal being applied to the control terminal of the load modulation transistor (SW).

**2.** The device according to claim 1, wherein the booster circuit (BCT, PM1-PM4) supplies the boosted direct voltage (Vpp1) from the alternating voltage (VA1) supplied by the antenna circuit (ACT).

**3.** The device according to claim 1, wherein the booster circuit (BCT, PM1-PM4) supplies the boosted direct voltage (Vpp1) from the not boosted direct voltage (Vcc).

**4.** The device according to one of claims 2 and 3, wherein the booster circuit comprises at least one charge pump stage (PMP1-PMP4).

**5.** The device according to claim 4, wherein the charge pump (PMP3, PMP4) also supplies a voltage (Vpp2) for erasing or programming an electrically erasable and programmable memory.

**6.** The device according to one of claims 4 and 5, wherein the charge pump (PMP2, PMP4) receives as pumping signal the alternating voltage (VA1) supplied by the antenna circuit.

**7.** The device according to one of claims 1 to 6, wherein the load modulation transistor (SW) is a MOS transistor.

**8.** The device according to one of claims 1 to 7, wherein the antenna circuit (ACT) comprises an antenna coil (La) which supplies the alternating voltage (VA1) in the presence of an alternating magnetic field (FLD).

**9.** The device according to one of claims 1 to 8, wherein:

- a first terminal (T1) of the antenna circuit is connected to a terminal of a rectifying diode (Dr) which other terminal receives a reference potential (GND),
- a second terminal (T2) of the antenna circuit is connected to a terminal of a smoothing capacitor (Cs) which other terminal receives the reference potential,
- the alternating voltage (VA1) is present on the first terminal (T1) of the antenna circuit,
- the second terminal (T2) of the antenna circuit has a rectified voltage (AC2, Vcc) in relation to the reference potential, and
- the modulation transistor (SW) receives the rectified voltage on a first conduction terminal (T1) and the alternating voltage (VA1) on another conduction terminal.

**10.** An electronic portable object, in particular a chip card or an electronic tag (TG), comprising a device according to one of claims 1 to 9.

**11.** A method for contactless data transmission by inductive coupling and load modulation, comprising:

- providing an antenna circuit (ACT) supplying an alternating voltage (VA1) in the presence of an alternating exciting field (FLD),
- providing a load modulation transistor (SW) having a control terminal to receive a load modulation signal having at least one low state and one high state, and a conduction terminal linked to a terminal (T1) of the antenna circuit (ACT) and receiving the alternating voltage (VA1) supplied by the antenna circuit,
- providing a rectifying circuit (Dr, Cs, DZ) to produce, from the alternating voltage (VA1), a not boosted direct voltage (Vcc),
- providing a control circuit (DSCT, CCT) electrically powered by the not boosted direct voltage (Vcc), to supply a first load modulation signal (Slml) which has in the high state a not boosted level of voltage (Vcc),
- producing a boosted direct voltage (Vpp1) greater than the peak value (VA1max) of the alternating voltage (VA1), the method being **characterised in that** it comprises:
- transforming the first load modulation signal (Slml) into a second load modulation signal (Slm2) which has in the high state a level of voltage equal to the boosted direct voltage (Vpp1), and
- applying the second load modulation signal (Slm2) to the control terminal of the load modulation transistor (SW).

**12.** The method according to claim 11, wherein the boosted direct voltage (Vpp1) is produced from the alternating voltage (VA1) supplied by the antenna circuit.

**13.** The method according to claim 12, wherein the boosted direct voltage (Vpp1) is produced from the not boosted direct voltage (Vcc).

**14.** The method according to one of claims 11 to 13, wherein at least one charge pump stage (PMP1-PMP4) is used to produce the boosted voltage (Vpp1).

**15.** The method according to claim 14, wherein the charge pump (PMP3, PMP4) is also used to produce a voltage (Vpp2) for erasing or programming an electrically erasable and programmable memory.

**16.** The method according to one of claims 14 and 15, wherein the alternating voltage (VA1) supplied by the antenna circuit (ACT) is used as pumping signal of the charge pump (PMP2, PMP4).

**17.** The method according to one of claims 11 to 16, wherein a MOS transistor is used as load modulation transistor (SW).

18. The method according to one of claims 11 to 17, comprising:

- connecting a first terminal (T1) of the antenna circuit to a terminal of a rectifying diode (Dr),
- applying a reference potential to the other terminal of the rectifying diode (Dr),
- connecting a second terminal (T2) of the antenna circuit (ACT) to a terminal of a smoothing capacitor,
- applying the reference potential to the other terminal of the smoothing capacitor,
so that the alternating voltage (VA1) appears on the first terminal (T1) of the antenna circuit and that a rectified voltage in relation to the reference potential appears on the second terminal (T2) of the antenna circuit, and
- applying the rectified voltage to a conduction terminal of the load modulation transistor and applying the alternating voltage (VA1) to another conduction terminal of the transistor.

**Patentansprüche**

1. Vorrichtung zur Übertragung von Daten ohne Kontakt (DV1, DV2, DV3, DV4, DV5) umfassend

- einen Antennenkreis (ACT), der eine Wechselspannung (VA1) in Anwesenheit eines Erregerwechselfeldes (FLD) liefert,
- einen Ladungsmodulationstransistor (SW) mit einer Prüfklemme, die ein Ladungsmodulationssignal, das zumindest einen niedrigen Zustand und einen hohen Zustand aufweist, empfängt, und eine Leitungsklemme, die die Wechselspannung (VA1) empfängt,
- einen Gleichrichterkreis (Dr, Cs, DZ), um anhand der Wechselspannung (VA1) eine nicht verstärkte Gleichspannung (Vcc) zu erzeugen,
- einen Kontrollkreis (DSCT, CCT), der durch die nicht verstärkte Gleichspannung (Vcc) elektrisch versorgt wird, um ein erstes Ladungsmodulationssignal (Slm1), das im hohen Zustand einen nicht verstärkten Spannungspegel (Vcc) aufweist, zu liefern, und
- einen Spannungserhöhungskreis (BCT, PMP1-PMP4), um eine verstärkte Gleichspannung (Vpp1), die größer als ein Spitzenwert (VA1max) der Wechselspannung (VA1) ist, zu liefern,

**dadurch gekennzeichnet, dass** sie einen Spannungsanpassungskreis (VCT) zum Umwandeln des ersten Ladungsmodulationssignals (Slml) in ein zweites Ladungsmodulationssignal (Slm2), das im hohen Zustand einen Spannungspegel aufweist, der der verstärkten Gleichspannung (Vpp1) entspricht, umfasst, wobei das zweite Ladungsmodulationssignal an die Prüfklemme des Ladungsmodulationstransistors (SW) angewandt wird.

2. Vorrichtung nach Anspruch 1, in der der Spannungserhöhungskreis (BCT, PMP1-PMP4) die verstärkte Gleichspannung (Vpp1) anhand der Wechselspannung (VA1), die vom Antennenkreis (ACT) geliefert wird, liefert.

3. Vorrichtung nach Anspruch 1, in der der Spannungserhöhungskreis (BCT, PMP1-PMP4) die verstärkte Gleichspannung (Vpp1) anhand der nicht verstärkten Gleichspannung (Vcc) liefert.

4. Vorrichtung nach einem der Ansprüche 2 und 3, in der der Spannungserhöhungskreis zumindest eine Stufe einer Ladungspumpe (PMP1-PMP4) umfasst.

5. Vorrichtung nach Anspruch 4, in der die Ladungspumpe (PMP3, PMP4) ebenfalls eine Lösch- oder Programmierspannung (Vpp2) eines elektrisch lösch- und programmierbaren Speichers liefert.

6. Vorrichtung nach einem der Ansprüche 4 und 5, in der die Ladungspumpe (PMP2, PMP4) als Pumpsignal die Wechselspannung (VA1), die vom Antennenkreis geliefert wird, empfängt.

7. Vorrichtung nach einem der Ansprüche 1 bis 6, in der der Ladungsmodulationstransistor (SW) ein MOS-Transistor ist.

8. Vorrichtung nach einem der Ansprüche 1 bis 7, in der der Antennenkreis (ACT) eine Antennenspule (La), die die Wechselspannung (VA1) in Anwesenheit eines magnetisches Wechselfeldes (FLD) liefert, umfasst.

9. Vorrichtung nach einem der Ansprüche 1 bis 8, in der:

- eine erste Klemme (T1) des Antennenkreises mit einer Klemme von einer Gleichrichterdiode (Dr), von der die andere Klemme ein Bezugspotential (GND) empfängt, verbunden ist,
- eine zweite Klemme (T2) des Antennenkreises mit einer Klemme von einem Ladekondensator (Cs), von der die andere Klemme das Bezugspotential empfängt, verbunden ist,
- die Wechselspannung (VA1) an der ersten Klemme (T1) des Antennenkreises anwesend ist,
- die zweite Klemme (T2) des Antennenkreises eine gleichgerichtete Spannung (AC2, Vcc) im Verhältnis zum Bezugspotential aufweist, und
- der Modulationstransistor (SW) die gleichgerichtete Spannung an einer ersten Leitungsklemme (T1) und die Wechselspannung (VA1) an einer anderen Leitungsklemme empfängt.

10. Tragbarer elektronischer Gegenstand, insbesondere Chipkarte oder elektronisches Etikett (TG), umfassend eine Vorrichtung nach einem der Ansprüche 1 bis 9.

11. Verfahren zur Übertragung von Daten ohne Kontakt durch induktive Kopplung und Ladungsmodulation, umfassend die Schritte, die folgendes beinhalten:

    - einen Antennenkreis (ACT), der eine Wechselspannung (VA1) in Anwesenheit eines Erregerwechselfeldes (FLD) liefert, vorsehen,
    - einen Ladungsmodulationstransistor (SW) mit einer Prüfklemme, um ein Ladungsmodulationssignal, das zumindest einen niedrigen Zustand und einen hohen Zustand aufweist, zu empfangen, und mit einer Leitungsklemme, die mit einer Klemme (T1) des Antennenkreises (ACT) verbunden ist und die Wechselspannung (VA1), die vom Antennenkreis geliefert wird, empfängt, vorsehen,
    - einen Gleichrichterkreis (Dr, Cs, DZ) vorsehen, um anhand der Wechselspannung (VA1) eine nicht verstärkte Gleichspannung (Vcc) zu erzeugen,
    - einen Kontrollkreis (DSCT, CCT), der durch die nicht verstärkte Gleichspannung (Vcc) elektrisch versorgt wird, um ein erstes Ladungsmodulationssignal (Slml), das im hohen Zustand einen nicht verstärkten Spannungspegel (Vcc) aufweist, zu liefern, vorsehen,
    - eine verstärkte Gleichspannung (Vpp1), die größer als der Spitzenwert (VA1max) der Wechselspannung (VA1) ist, erzeugen,

Wobei das Verfahren **dadurch gekennzeichnet ist, dass** es die folgenden Schritte umfasst:

    - das erste Ladungsmodulationssignal (Slm1) in ein zweites Ladungsmodulationssignal (Slm2), das im hohen Zustand einen Spannungspegel aufweist, der der verstärkten Gleichspannung (Vpp1) entspricht, umwandeln, und
    - das zweite Ladungsmodulationssignal (Slm2) an die Prüfklemme des Ladungsmodulationstransistors (SW) anwenden.

12. Verfahren nach Anspruch 11, in dem die verstärkte Gleichspannung (Vpp1) anhand der Wechselspannung (VA1), die vom Antennenkreis geliefert wird, erzeugt wird.

13. Verfahren nach Anspruch 12, in dem die verstärkte Gleichspannung (Vpp1) anhand der nicht verstärkten Gleichspannung (Vcc) erzeugt wird.

14. Verfahren nach einem der Ansprüche 11 bis 13, in dem zumindest eine Stufe einer Ladungspumpe (PMP1-PMP4) verwendet wird, um die verstärkte Spannung (Vpp1) zu erzeugen.

15. Verfahren nach Anspruch 14, in dem die Ladungspumpe (PMP3, PMP4) ebenfalls verwendet wird, um eine Lösch- oder Programmierspannung (Vpp2) eines elektrisch lösch- und programmierbaren Speichers zu erzeugen.

16. Verfahren nach einem der Ansprüche 14 und 15, in dem die Wechselspannung (VA1), die vom Antennenkreis (ACT) geliefert wird, als Pumpsignal der Ladungspumpe (PMP2, PMP4) verwendet wird.

17. Verfahren nach einem der Ansprüche 11 bis 16, in dem ein MOS-Transistor als Ladungsmodulationstransistor (SW) verwendet wird.

18. Verfahren nach einem der Ansprüche 11 bis 17, umfassend die folgenden Schritte:

    - eine erste Klemme (T1) des Antennenkreises an eine Klemme einer Gleichrichterdiode (Dr) anschließen,
    - ein Bezugspotential an die andere Klemme der Gleichrichterdiode (Dr) anwenden,
    - eine zweite Klemme (T2) des Antennenkreises (ACT) an eine Klemme eines Ladekondensators anschließen,
    - das Bezugspotential an die andere Klemme des Ladekondensators anwenden,
    so dass die Wechselspannung (VA1) an der ersten Klemme (T1) des Antennenkreises erscheint, und dass eine gleichgerichtete Spannung im Verhältnis zum Bezugspotential an der zweiten Klemme (T2) des Antennenkreises erscheint, und
    - die gleichgerichtete Spannung an eine Leitungsklemme des Ladungsmodulationstransistors anwenden und die Wechselspannung (VA1) an eine andere Leitungsklemme des Transistors anwenden.

Fig. 1

Fig. 2A

Fig. 2B

Fig. 3

Fig. 4

**Fig. 5**

**Fig. 6**

Vcc (VA2)

SW

Vpp1>VA1max — Slm2

VA1

**Fig. 7A**

**Fig. 7B**

**Fig. 8**

**Fig. 9**

EP 2 016 537 B1

**Fig. 10**

**Fig. 11**

16

**Fig. 12**

**Fig. 13**

**Fig. 14**

**Fig. 15**

**Fig. 16**

## RÉFÉRENCES CITÉES DANS LA DESCRIPTION

**Documents brevets cités dans la description**

- EP 0899682 A2